(19) Europäisches Patentamt
European Patent Office
Office européen des brevets

(11) Publication number: **0 087 831**
**B1**

# (12) EUROPEAN PATENT SPECIFICATION

(45) Date of publication of patent specification: **13.08.86**

(51) Int. Cl.⁴: **C 08 L 77/00,** C 08 L 77/12

(21) Application number: **83200216.6**

(22) Date of filing: **10.02.83**

## (54) High-toughness thermoplastic polyamide composition.

(30) Priority: **23.02.82 IT 1979382**

(43) Date of publication of application:
**07.09.83 Bulletin 83/36**

(45) Publication of the grant of the patent:
**13.08.86 Bulletin 86/33**

(84) Designated Contracting States:
**AT BE CH DE FR GB LI NL SE**

(56) References cited:
**EP-A-0 031 287**
**DE-A-2 435 266**
**GB-A-1 588 526**

(73) Proprietor: **ANIC S.p.A.**
**Via Ruggero Settimo, 55**
**I-90139 Palermo (IT)**

(72) Inventor: **Zappa, Alessandro**
**Via Ippolito Nievo 1**
**I-20058 Villasanta Milan (IT)**
Inventor: **Di Donato, Nicola**
**Via Gela 8**
**I-75010 Pisticci Scalo Matera (IT)**

(74) Representative: **Roggero, Sergio et al**
**Ing. Barzanò & Zanardo Milano S.p.A. Via Borgonuovo 10**
**I-20121 Milano (IT)**

**EP 0 087 831 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an improved high-toughness thermoplastics polyamide composition exhibiting a high impact resistance, especially at low temperatures. It is known that polyamides such as nylon-6 and nylon-66 have excellent physical and mechanical properties which enabled them to be often used as replacement for metals in several technical uses, but their resistance to impact in the dry state and their behaviour at temperatures considerably lower than ambient temperatures have proved inadequate.

Attempts to overcome such a shortcoming have been made by admixing polyamides with other plastics materials which had an intrinsic resistance to impact strength and low temperatures: said mixtures had been prepared either mechanically or chemically.

The mechanical approach did often consist in coextrusion whereas the chemical approach took several forms.

Thus, the US Patent 3.796.711 taught grafting acrylic elastomers to polyamides, the Belgian Patent 831.600 taught mixing of molten polyamides with grafted mixed acrylic-styrene-acrylonitrile esters, the Japanese Patent Application 139.844 disclosed mixing of polyamides with polyurethans, the Belgian Patent 851.985 taught to mix polyamides with cross-linked nitrile rubbers, and similar teachings can also be found in the US Patent to mix polyamides with cross-linked nitrile rubbers, and similar teachings can also be found in the US Patent 4.174.358 and is the Japanese Patent 120.762/78.

All of these approaches, however, did not afford the desired properties for the compounded polyamides.

Closer approaches have been the EP—A—0 031 287 which suggested a block-structure which could be either statistical or alternating as regards the polyesteramide to be combined with the polyamide, and the DE—A—2 435 266 which suggested a complex composition of a polyamide with several different kinds of acrylonitrile pre-polymers to be variously combined with the starting polyamide.

Also these attempts did not prove very successful in providing the desired physical and mechanical properties.

To solve this problem, the invention has now provided a high-toughness thermoplastics polyamide composition comprising at least one polyamide-6 or polyamide-66 and at least one alternating copolyesteramide elastomer, characterized in that said alternating copolyesteramide elastomer consists of recurring segments of a long-chain polyesteramide having the general formula:

$$\left[ O-PAG-O-\underset{\overset{\|}{O}}{C}-R-\underset{\overset{\|}{O}}{C} \right]$$

and of recurring segments of short-chain diesteramides having the general formula:

$$\left[ O-A-O-\underset{\overset{\|}{O}}{C}-R-\underset{\overset{\|}{O}}{C} \right]$$

wherein —PAG— is a bivalent radical deriving from a polyoxyalkyleneglycol having a molecular weight between 400 and 3500, A is a bivalent radical deriving from alpha, omega-dihydroxyalkanes having a molecular weight less than 2500, and Ris a bivalent radical derived from a diesteramide and having the general formula:

$$R^1-O-\underset{\overset{\|}{O}}{C}-R^2-\underset{\overset{\|}{O}}{C}-NH-R^3-NH-\underset{\overset{\|}{O}}{C}-R^2-\underset{\overset{\|}{O}}{C}-OR^1$$

wherein $R_1$ is an alkyl radical having from 1 to 8 carbon atoms, an aryl radical having from 6 to 10 carbon atoms, and $R^2$ and $R^3$, equal or different, are bivalent hydrocarbon radicals having from 2 to 30 carbon atoms.

The preferred quantity of the alternating copolyesteramide elastomer is from 3% to 10% of the total weight of the composition and still better results are obtained when the quantity is from 5% to 7%.

More particularly, it has been found that by admixing with a polyamide of the kind of the polyamide-6 (so-called Nylon-6) or polyamide-66 (so called Nylon-66) a comparatively reduced amount of a copolyesteramide alternating elastomer as defined in the foregoing, and more particularly an elastomer of the type described in the British Patent No. 1,588,526 filed on June 17, 1977, in particular that obtained by the copolymerisation of hexamethylenediamine with dimethylterephthalate followed by condensing the polymer obtained in this manner with hexanediol and polytetrahydrofuran (polytetramethyleneglycol), of two different hardnesses, the quantity being variable and preferably less than 10% of the polyamide, a thermoplastic composition is obtained which preserves the positive technical characteristics of polyamides, but possesses superior impact-resistance properties, these properties being maintained at low temperature, such characteristics being required in particular for components for automobile use, for protective helmets etc.

The two different types of polymer were mixed in a simple mechanical mixer in the form of a single-screw extruder of diameter 45 mm and compression ratio 1:3, at a temperature of between 230 and 250°C and a speed of 75 r.p.m.

Data are given hereinafter by way of example relating to mixtures of polyamide 6 (polycaprolactam) with elastomer copolyesteramides of the type stated heretofore, in various proportions.

For comparison purposes, mixtures of polyamide 6 with other polymers were prepared, and an evaluation was also made of the characteristics of nylon 6 as such.

Two types of nylon 6 were used, of relative viscosity (η) 2.7 and 3.8, corresponding respectively to molecular weights of around 18,000 and 29,000, and these were mixed with copolyesteramides of the type indicated heretofore, which had a hardness (measured by the Shore A method) of respectively 55 (containing 40% of flexible phase in the molecule) and 40 (containing 90% of flexible phase in the molecule).

Mixtures of nylon 6 of viscosity 3.8 with copolyesteramide of hardness 55 were prepared in the proportions 97:3 (ex. 1), 93:7 (ex. 2), 95:5 (ex. 3), 86:14 (ex. 4), and with copolyesteramide of hardness 40 in the proportions 95:5 (ex. 5) and 93:7 (ex. 6). Nylon 6 of relative viscosity 2.7 was mixed with copolyesteramide of hardness 55 in the proportions 97:3 (ex. 7), 93:7 (ex. 8), and with copolyesteramide of hardness 40 in the proportions 93:7 (ex. 9). For the comparison tests, polyamide 6 was mixed with polyethylene, both alone and containing EPDM esters, but it was not possible to then evaluate the effects thereof because the mixtures presented delamination phenomena.

It was however possible to prepare valid mixtures using commercially available products, the range of these mixtures comprising polyamide 6 with EPDM elastomers, with ethylene-vinylacetate rubber, with ethylene-ethylacrylate rubbers and with ionomer polyethylene. Test pieces were prepared from the available mixtures for subjection to tensile, bending and impact tests, in accordance with ASTM and ISO standards as indicated hereinafter.

The results obtained are recorded in the table, which shows the significant characteristics of mixtures of polyamides made impact-resistant (dry product).

From an examination of the results given in the table, it can be seen that polyamide as such has excellent rigidity characteristics but very poor elastic characteristics. In this respect, it has a very low ultimate elongation, and is extremely fragile even at ambient temperature.

In the case of the other mixtures, even where for the same rigidity the elasticity is improved, there is still poor impact resistance at low temperature, except in the case of Zytel ST 801 (a commercial polyamide), which however has almost totally lost the characteristics necessary in a plastics material for engineering uses (modulus 4,800), and has become rather similar to an actual rubber.

Only the mixtures of polyamides of type 6 with copolyesteramide according to the present invention show good impact strength even at low temperature. The positive effect of the copolyesteramide in the preferred percentages of 5 to 7% with respect to the polyamide is apparent even on mixtures of polyamides with other impact-resistant substances as shown in Examples 17 and 18, in which it is added to a polyamide 6 to which ionomer polyethylene has been added.

TABLE

| Ex. No. | Type of mixture | % of components | Bending modulus at 23°C, kg/cm² | Ultimate elongation % (at 23°C) | Impact strength (falling body—Joules) and percentage of test piece fractures | | | |
|---|---|---|---|---|---|---|---|---|
| | | | | | At ambient temperature | | At 40°C | |
| | | | | | No. fractures | Joules | No. fractures | Joules |
| 1 | PA6-TROPEA 55 | 97/3 | 24,000 | >200 | None up to | 100 | 60% | 75 |
| 2 | PA6-TROPEA 55 | 93/7 | 22,500 | >200 | None up to | 100 | 20% | 75 |
| 3 | PA6-TROPEA 55 | 95/5 | 23,000 | >200 | None up to | 100 | 25% | 75 |
| 4 | PA6-TROPEA 55 | 86/14 | 19,500 | 41 | 10% | 75 | 60% | 75 |
| 5 | PA6-TROPEA 40 | 95/5 | 22,500 | >200 | None up to | 110 | 30% | 75 |
| 6 | PA6-TROPEA 40 | 93/7 | 20,000 | >200 | None up to | 110 | 30% | 75 |
| 7 | PA6-TROPEA 55 | 97/3 | 24,200 | 70—80 | 10% | 75 | 60% | 75 |
| 8 | PA6-TROPEA 55 | 93/7 | 23,500 | >200 | None up to | 110 | 25% | 75 |
| 9 | PA6-TROPEA 40 | 93/7 | 21,800 | >200 | None up to | 110 | 40% | 75 |
| | PA6 as such | — | 26,000 | 70—80 | 100% | 30 | not measurable | |
| 10 | EN 30 (BIP) | | 22,500 | >200 | None up to | 110 | 100% | 40 |
| 11 | ZYTEL ST 801 | | 4,800 | >200 | None up to | 120 | None up to | 75 |
| 12 | PA6 Surlyn 1555 | 87/13 | 20,000 | >200 | None up to | 100 | 80% | 40 |
| 13 | PA6 Surlyn 1554 | 87/13 | 20,000 | >200 | None up to | 100 | 60% | 75 |
| 14 | PA6 Nordel 2722 | 93/7 | 24,000 | 10 | 100% | 60 | | |
| 15 | PA6 Escorene 20/28 | 87/13 | 22,000 | 15 | None up to | 75 | 100% | 40 |
| 16 | PA6 DPD 6169 | 87/13 | 20,500 | >200 | 70% | 75 | 100% | 40 |
| 17 | PA6 Surlyn 1554 TROPEA 55 | 87/8/5 | 22,500 | >200 | None up to | 120 | 10% | 75 |
| 18 | PA6 Surlyn 1554 TROPEA 55 | 87/8/5 | 22,500 | >200 | None up to | 120 | 15% | 75 |
| | Analysis methods used | | ASTM D790 | ASTM D638 | ISO DP 6603 | | | |

In the table of the previous pages, the polyamide 6 (PA6) of Examples 1 to 6 and 12 to 17 has a relative viscosity of 3.8, and that of Examples 7 to 9 and 13 has a relative viscosity of 2.7. TROPEA is the commercial name of the copolyesteramide elastomer stated in the patent text, and having a Shore A hardness of 40 and 55, respectively. Zytel ST801 is an impact-resistant composition of the firm Du Pont, which is based on nylon 6 and is of unknown composition. EN 30 is a polyamide 6 of the firm British Industrial Plastics, which is made impact-resistant by 12—15% of ionomer polymer. Surlyn is the commercial name of the ionomer polyethylene of the firm Du Pont. Nordel is the commercial name of the ethylene-propylene-diene elastomers of the firm Du Pont. Escorene is the commercial name of an ethylene-vinylacetate copolymer of the firm Exxon. DPD is the symbol of an ethylene-ethylacrylate elastomer of the firm Union Carbide.

**Claims**

1. A high-toughness thermoplastics polyamide composition comprising at least one polyamide-6 or polyamide-66 and at least one alternating copolyesteramide elastomer, characterized in that said alternating copolyesteramide elastomer consists of recurring segments of a long-chain polyesteramide having the general formula:

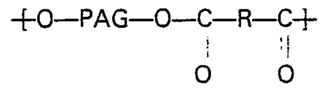

and of recurring segments of short-chain diesteramides having the general formula:

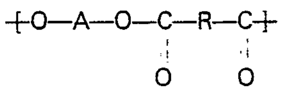

wherein —PAG— is a bivalent radical deriving from a polyoxyalkyleneglycol having a molecular weight between 400 and 3500, A is a bivalent radical deriving from alpha, omega-dihydroxyalkanes having a molecular weight less than 2500, and R is a bivalent radical derived from a diesteramide and having the general formula:

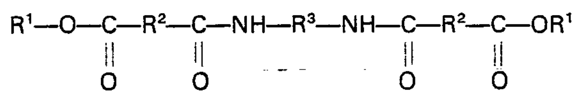

wherein $R^1$ is an alkyl radical having from 1 to 8 carbon atoms, an aryl radical having from 6 to 10 carbon atoms, and $R^2$ and $R^3$, equal or different, are bivalent hydrocarbon radicals having from 2 to 30 carbon atoms.

2. A composition according to claim 1, characterized in that the quantity of said at least one alternating copolyesteramide elastomer is from 3% to 10% of the total weight of the composition.

3. A composition according to claim 2, characterized in that the quantity of said at least one alternating copolyesteramide elastomer is from 5% to 7% of the total weight of the composition.

**Patentansprüche**

1. Thermoplastisches Polyamid-Zusammensetzung von hoher Zähigkeit, enthaltend wenigstens ein Polyamid-6 oder Polyamid-66 und wenigstens ein alternierendes Copolyesteramid-Elastomer, dadurch gekennzeichnet, daß das genannte alternierende Copolyesteramid-Elastomer aus wiederkehrenden Abschnitten eines langkettigen Polyesteramides mit der allgemeinen Formel:

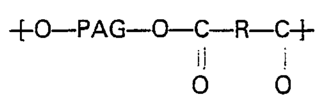

und aus wiederkehrenden Abschnitten von kurzkettigen Diesteramiden mit der allgemeinen Formel:

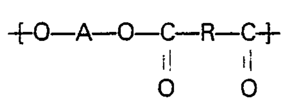

besteht, worin —PAG— einen zweiwertigen, von einem Polyoxyalkylenglykol mit einem Molekulargewicht von 400 bis 3500 abgeleiteten Rest bedeutet, A einen zweiwertigen, von alpha, omega-Dihydroxyalkanen mit einem Molekulargewicht von unter 2500 abgeleiteten Rest darstellt und R einen zweiwertigen Rest bedeutet, der von einem Diesteramid abgeleitet ist und die allgemeine Formel:

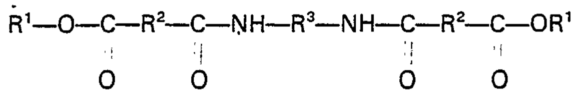

aufweist, worin $R^1$ einen Alkylrest mit 1 bis 8 Kohlenstoffatomen oder einen Arylrest mit 6 bis 10 Kohlenstoffatomen bedeutet und $R^2$ und $R^3$, die gleich oder verschieden sind, zweiwertige Kohlenwasserstoffreste mit 2 bis 30 Kohlenstoffatomen bedeuten.

2. Zusammensetzung nach Anspruch 1, dadurch gekennzeichnet, daß der Anteil des genannten, wenigstens einen alternierenden Copolyesteramid-Elastomers von 3 bis 10% des Gesamtgewichtes der Zusammensetzung ausmacht.

3. Zusammensetzung nach Anspruch 2, dadurch gekennzeichnet, daß der Anteil des genannten, wenigstens einen alternierenden Copolyesteramid-Elastomers von 5% bis 7% des Gesamtgewichtes der Zusammensetzung beträgt.

**Revendications**

1. Composition de polyamides thermoplastiques de haute résilience, comprenant au moins un polyamide-6 ou polyamide-66, et au moins un élastomère copolyesteramide alternant, caractérisée en ce que ledit élastomère copolyester-amide alternant est constitué de segments répétitifs d'un polyester-amide à longue chaîne de formule générale:

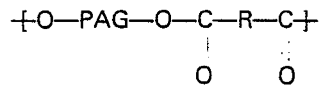

et de segments répétitifs de diester-amide à courte chaîne de formule générale:

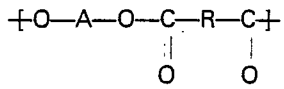

où —PAG— est un radical bivalent dérivant d'un polyoxyalkylèneglycol ayant un poids moléculaire compris entre 400 et 3500, A est un radical bivalent dérivant d'alpha,oméga-dihydroxyalcanes ayant un poids moléculaire inférieur à 2500, et R est un radical divalent dérivé d'un diester-amide et de formule générale:

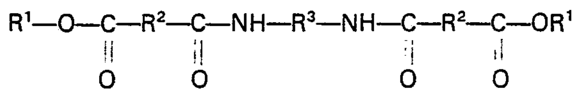

dans laquelle $R_1$ est un radical alkyle de 1 à 8 atomes de carbone, un radical aryle de 6 à 10 atomes de carbone, et $R^2$ et $R^3$, qui sont identiques ou différents, sont des radicaux hydrocarbonés divalents de 2 à 30 atomes de carbone.

2. Composition conforme à la revendication 1, caractérisée en ce que la quantité dudit au moins un élastomère copolyester-amide alternant va de 3 à 10% du poids total de la composition.

3. Composition conforme à la revendication 2, caractérisée en ce que la quantité dudit au moins un élastomère copolyester-amide alternant va de 5 à 7% du poids total de la composition.